# EUROPEAN PATENT APPLICATION

(11) **EP 2 133 935 A1**
(43) Date of publication of application: **16.12.2009**
(21) Application number: 07721085.4
(22) Date of filing: 08.05.2007
(51) Int. Cl.: H01M 2/04

(54) **AN IMPROVED BATTERY MOUTH-SEALING ASSEMBLY AND A BATTERY INCLUDING THE SAME**

(30) Priority: 02.03.2007 CN 200710073440
(71) Applicant: Shenzhen Bak Battery Co., Ltd, Longgang District Shenzhen Guangdong 518119 (CN)
(72) Inventor: MAO, Huanyu, Guangdong 518119 (CN); LIU, Fuyong, Guangdong 518119 (CN); ZHAO. Junfeng, Guangdong 518119 (CN)
(74) Representative: Critten, Matthew Peter
(86) International application number: PCT/CN2007/001512
(87) International publication number: WO 2008/106834

(57) **Abstract**

A battery mouth-sealing assembly and a battery including the said battery mouth-sealing assembly, wherein the mouth-sealing assembly includes an explosion-proof assembly and a mouth-sealing seat. The explosion-proof assembly is held in the hollow cavity, which is in center of mouth-sealing seat, and a supporting-step for supporting the explosion-proof assembly is provided on the bottom of the hollow cavity of the mouth-sealing seat. The first hole for inputting the electrode is provided on the supporting-step and the second hole for outputting the electrode is provided on the top of the mouth-sealing seat, the explosion-proof assembly insulated and sealed is fixed in the hollow cavity.

## Description

### FIELD OF THE INVENTION

The present invention relates to a battery enveloping assembly with safety means, and also relates to a battery.

### BACKGROUND THE INVENTION

With quick improvement of electronic apparatus, such as audio apparatus, camera apparatus and personal computers, in respect of portability and mobility, high-capacity non-hydrolysate secondary batteries, typically various alkaline batteries and lithium secondary batteries, are becoming preferred driving power for those electronic apparatus.

Since such high-capacity battery is enclosed in an airtight container, abnormal gases generally occur and then accumulate inside the battery in the event of overcharging or misusing a battery charger, resulting in an excessive pressure inside the battery. Thus, there is a risk of causing the electronic apparatus damaged or people injured due to the break of the battery. In order to avoid such a risk, said battery has been designed to have explosion-proof means (i.e. an explosion-proof assembly) capable of discharging gases by opening a valve when the pressure inside the battery exceeds a predetermined value.

Chinese Patents Nos. CN2411578Y (Cylindrical Explosion-proof Lids for Lithium Batteries), CN1142601C (Airtight Batteries), CN1144302C (Explosion-proof Enveloping Plates for Airtight Batteries and Method for Manufacturing Such Plates) and CN1156037C (Explosion-proof Safety Valve Means and Airtight Secondary Batteries Using the Same) disclose a variety of explosion-proof means for sealing batteries with different configurations. In the battery using said explosion-proof means, electricity can be cut off when the pressure inside the battery increases. After the electricity is cut off, if the pressure inside the battery keeps increasing and thus exceeds a predetermined pressure which an explosion-proof membrane can bear, the explosion membrane ruptures and the pressure inside the battery decrease so as to prevent the explosion of the battery.

At present, sealing between an explosion-proof lid assembly with the said explosion-proof means and a battery container is obtained by means of mechanical crimping buckling. Nevertheless, since the wall thickness of the battery is limited, batteries with said explosion-proof means should have a battery container with a high level of mechanical strength, most commonly, a cylindrical battery container with a steel shell. Said explosion-proof means can not be used in batteries with battery containers made of soft materials having a low level of mechanical strength, such as aluminum and aluminum alloy, since the mechanical crimping buckling is not suitable for the batteries with battery containers made of those materials.

As a result, batteries with battery containers having a low level of mechanical strength are enveloped by means of welding rather than mechanical crimping buckling. A lid assembly of such battery is not provided with safety means and thus has potential safety problems.

Furthermore, since the current explosion-proof means and other pants ( such as a seal for sealing the battery container ) of the explosion-proof lid assembly are structurally dependent on each other, the explosion-proof means cannot be separately produced in advance, causing assembling difficult and affecting the assembling efficiency.

### SUMMARY OF THE INVENTION

It is an object of the invention to provide an easily-assembled battery enveloping assembly with a safety means suitable for either a battery container having a high level of mechanical strength, e.g., a battery container using a steel shell, or a battery container having a low level of mechanical strength, e.g. a battery container made of aluminum, aluminum alloy, etc., so as to overcome the deficiency in the prior art that a lid assembly of a battery container having a low level of mechanical strength cannot be provided with a safety means .

It is another object of the invention to provide a battery enveloping assembly comprising an enveloping base and an explosion-proof means, wherein the enveloping base and the explosion-proof assembly are independent and complete relative to each other in terms of structure, so as to facilitate the independent production thereof to lower the production cost and increase the assembly efficiency, and cause both the enveloping base and the explosion-proof assembly to be widely applicable for battery containers with various shapes.

The above objects can be achieved by the following technical solutions.

A battery enveloping assembly comprises an explosion-proof assembly and an enveloping base. A cavity configured to house the explosion-proof assembly is provided at a center of the enveloping base. A supporting surface configured to support the explosion-proof assembly is provided on the enveloping base at a bottom of the cavity. A first through hole through which an electrode is connected to the explosion-proof assembly is provided in the supporting surface. The explosion-proof assembly is secured inside the cavity in an insulating and sealing manner. A second through hole through which an electrode extends out from the explosion-proof assembly is provided in the enveloping base on a top of the cavity.

The enveloping base comprises an enveloping plate and a casing extending upwardly from the enveloping plate. The cavity is formed inside the casing, a portion of the enveloping plate within the casing forms the supporting face, and the explosion-proof assembly is secured inside the casing in an insulating and sealing manner.

The external surface of the enveloping plate is provided with a connection portion protruding outwardly relative to the casing.

The casing has an inwardly-bending top portion at a center of which the second through hole is provided, and the explosion-proof assembly is secured inside the casing by the inwardly-bending portion in an insulating and sealing manner.

The explosion-proof assembly comprises an insulation fitting with an inner wall of the cavity, a cap with an aperture, a first explosion-proof membrane and a force-bearing plate. The insulation further extends in a direction of the first through hole to form an insulation external supporting surface with a third through hole. The cap and the first explosion-proof membrane are electrically connected at their respective peripheries and secured tightly in an annular sealing groove formed between the bending portion and the supporting surface through the insulation. A pressure-relief chamber is formed centrally between the cap and the first explosion-proof membrane, and a central portion of the first explosion-proof membrane is electrically connected via the third through hole to the force-bearing plate bearing against the insulation external supporting surface.

A protrusion extends vertically from the insulation external supporting surface in adjacent to a side wall of the second through hole of the enveloping plate, and the force-bearing plate and the enveloping plate are separated by the protrusion.

The explosion-proof assembly comprises a first insulation fitting with an inner wall of the cavity, a cap with an aperture, a first explosion-proof membrane, an annular insulation and a force-bearing plate. The first insulation has a hollow cavity and an annular sealing groove on a side wall of the first insulation. The cap with the aperture, the first explosion-proof membrane, the annular insulation and the force-bearing plate are stacked successively at their respective peripheries and then pressed tightly in the annular sealing groove. The periphery of the cap is electrically connected to that of the first explosion-proof membrane. A pressure-relief chamber is formed centrally between the cap and the explosion-proof membrane. A central portion of the first explosion-proof membrane passes through the annular insulation and is electrically connected to the force-bearing plate.

The explosion-proof assembly comprises a first insulation fitting with an inner wall of the cavity, a cap with an aperture, a first explosion-proof membrane, a second explosion-proof membrane, a fastener and a second insulation. Each of the first insulation, second insulation and fastener has a hollow cavity and an annular sealing groove on a side wall of the respective cavity. The cap and the first explosion-proof membrane are electrically connected and stacked successively at their respective peripheries and then pressed tightly in the annular sealing groove of the first insulation. A pressure-relief chamber is formed centrally between the cap and the explosion-proof membrane. The first insulation and a periphery of the second explosion-proof membrane below the first insulation are held and tightly secured in the annular sealing groove of the fastener. Central portions of the first and second explosion-proof membranes are electrically connected. A circumference of the annular sealing groove of the fastener is held and secured tightly in the annular sealing groove of the second insulation.

A Positive Temperature Coefficient element is connected in series between a periphery of the cap and a periphery of the first explosion-proof membrane by means of pressing.

A vent is provided in the force-bearing plate.

A score is provided on each of the explosion-proof membranes.

A battery comprises a container, a battery unit housed in the container and a battery enveloping assembly for sealing the container and conducting electricity from the battery unit. The battery enveloping assembly comprises an explosion-proof assembly and an enveloping base. A cavity configured to house the explosion-proof assembly is provided at a center of the enveloping base. A supporting surface configured to support the explosion-proof assembly is provided on the enveloping base at a bottom of the cavity. A first through hole through which an electrode is connected to the explosion-proof assembly is provided in the supporting surface. The explosion-proof assembly is secured inside the cavity in an insulating and sealing manner. A second through hole through which an electrode extends out from the explosion-proof assembly is provided in the enveloping base on a top of the cavity.

The enveloping base comprises an enveloping plate and a casing extending upwardly from the enveloping plate. The cavity is formed inside the casing, a portion of the enveloping plate within the casing forms the supporting face, and the explosion-proof assembly is secured inside the casing in an insulating and sealing manner. The external surface of the enveloping plate is provided with a connection portion protruding outwardly relative to the casing and is fixed to the container in a sealing manner through the connection portion protruding outwardly.

The casing has an inwardly-bending top portion at a center of which the second through hole is provided, and the explosion-proof assembly is secured inside the casing by the inwardly-bending portion in an insulating and sealing manner.

The explosion-proof assembly comprises an insulation fitting with an inner wall of the cavity, a cap with an aperture, a first explosion-proof membrane and a force-bearing plate. The insulation further extends in a direction of the first through hole to form an insulation external supporting surface with a third through hole. The cap and the first explosion-proof membrane are electrically connected at their respective peripheries and secured tightly in an annular sealing groove formed between the bending portion and the supporting surface through the insulation. A pressure-relief chamber is formed centrally between the cap and the first explosion-proof membrane, and a central portion of the first explosion-proof membrane is electrically connected via the third through hole to the force-bearing plate bearing against the insulation external supporting surface.

A protrusion extends vertically from the insulation external supporting surface along a side wall of the second through hole of the enveloping plate, and the force-bearing plate and the enveloping plate are separated by the protrusion.

The explosion-proof assembly comprises a first insulation fitting with an inner wall of the cavity, a cap with an aperture, a first explosion-proof membrane, an annular insulation and a force-bearing plate. The first insulation has a hollow cavity and an annular sealing groove on a side wall of the first insulation. The insulation further extends in a direction of the first through hole to form an insulation external supporting surface with a third through hole. The cap with the aperture, the first explosion-proof membrane, the annular insulation and the force-bearing plate are stacked successively at their respective peripheries and then pressed tightly in the annular sealing groove. The periphery of the cap is electrically connected to that of the first explosion-proof membrane. A pressure-relief chamber is formed centrally between the cap and the explosion-proof membrane. A central portion of the first explosion-proof membrane passes through the annular insulation and is electrically connected to the force-bearing plate.

The explosion-proof assembly comprises a first insulation fitting with an inner wall of the cavity, a cap with an aperture, a first explosion-proof membrane, a second explosion-proof membrane, a fastener and a second insulation. Each of the first insulation, second insulation and fastener has a hollow cavity and an annular sealing groove on a side wall of the respective cavity. The cap and the first explosion-proof membrane are electrically connected and stacked successively at their respective peripheries and then pressed tightly in the annular sealing groove of the first insulation. A pressure-relief chamber is formed centrally between the cap and the explosion-proof membrane. The first insulation and a periphery of the second explosion-proof membrane below the first insulation are held and tightly secured in the annular sealing groove of the fastener. Central portions of the first and second explosion-proof membranes are electrically connected. A circumference of the annular sealing groove of the fastener is held and secured tightly in the annular sealing groove of the second insulation.

A Positive Temperature Coefficient element is connected in series between a periphery of the cap and a periphery of the first explosion-proof membrane by means of pressing.

A vent is provided in the force-bearing plate and a score is provided on each of the explosion-proof membranes.

The following advantageous may be achieved by implementing the present invention.
1. The explosion-proof assembly may be sealed in the cavity of the enveloping base through the provision of the enveloping base. The material of the enveloping base may be selected freely as required. According to the material of the battery container, the enveloping base of appropriate material may be selected to envelop the battery container via welding or mechanical flanging. Therefore, the present invention is applicable for either a battery container having a high level of mechanical strength (e.g. a steel shell), or a battery container having a lower level of mechanical strength (e.g. aluminum, aluminum alloy, etc.). Accordingly, the present invention is applicable for batteries with various battery containers without any limitation to the mechanical strength of the battery container and the shape of the battery, such as a cylindrical battery with an aluminum shell, a square battery with an aluminum shell, a cylindrical battery with a steel shell and a square battery with a steel shell.
2. The explosion-proof assembly may be secured in the enveloping base in an insulating and sealing manner through the provision of the enveloping base. The explosion-proof assembly and the enveloping base are of independent complete structures, which facilitate the independent production thereof. Moreover, since the enveloping base has a simple structure and is very mature in terms of technique, the manufacturing cost and thus the price of the enveloping base is low, and a convenient and rapid assembly of the explosion-proof assembly is facilitated, so as to improve the assembly efficiency of the explosion-proof assembly significantly. Furthermore, the independence of the enveloping base and the explosion-proof assembly results in their wide applicability to the battery containers of various shapes.
3. Through the provision of the insulation external supporting surface with a third through hole on the insulation, the force-bearing plate bears against the insulation external supporting surface and thus is not directly supported on the enveloping base, so that the explosion-proof assembly obtains an independently complete structure relative to the enveloping base in a simple and convenient way.
4. The enveloping base may have the enveloping plate and a structure where the casing extending vertically upwardly from the enveloping plate, and may be hermetically connected to the container through the connection portion protruding from the external surface of the enveloping plate. Therefore, the structure of the enveloping plate is simpler and thus facilitates the assembly of the explosion-proof assembly. In addition, the structure of the enveloping plate does not affect the appearance of the sealed battery.
5. The enveloping base may have the enveloping plate and a structure where the casing extends vertically downwardly from the enveloping plate. The structure of the enveloping base provides such advantages as helping positioning between the enveloping plate and the container and facilitating welding due to the projection of the casing into the container while the casing is hermetically connected to the battery container by welding, and producing a battery with a smooth and novel appearance by exposing the enveloping plate rather than the bending portion to the outside.
6. The protruding annular connection portion may be provided in the middle of the external surface of the casing. This structure provides such advantages as helping positioning between the enveloping plate and the container due to the projection of a part of the casing into the container while the casing is hermetically connected to the battery container by welding, and facilitating welding between the enveloping plate and the container due to the exposure of a part of the casing out of the container.
7. The enveloping base may be conveniently, as required, designed as being of any shape, such as a circular shape which facilitates manufacturing and assembly.
8. The provision of the annular insulation ensures that only the central portion of the first explosion-proof membrane is electrically connected to the force-bearing plate.
9. The provision of the first explosion-proof membrane, second explosion-proof membrane and fastener provides a safe and reliable double protection against explosion.
10. The wall thickness of the enveloping base may be conveniently adjusted so as to ensure a good sealing within the cavity.
11. The provision of the score on the explosion-proof membrane provides a precisely control of the pressure value for the rupture of the explosion-proof membrane.

### DESCRIPTION OF THE DRAWINGS

Fig. 1 is a schematic view of a battery enveloping assembly.
Fig. 2 is a schematic view of the enveloping plate in Fig. 1.
Fig. 3 is a schematic view of the explosion-proof assembly in Fig. 1.
Fig. 4 is a schematic view of a battery using the battery enveloping assembly of Fig. 1.
Fig. 5 is a schematic view of another battery enveloping assembly.
Fig. 6 is a schematic view of the enveloping plate in Fig. 5.
Fig. 7 is a schematic view of a battery using the battery enveloping assembly of Fig. 5.
Fig. 8 is a schematic view of another battery enveloping assembly.
Fig. 9 is a schematic view of the casing in Fig. 8.
Fig. 10 is a schematic view of a battery using the battery enveloping assembly of Fig. 8.
Fig. 11 is a schematic view of an explosion-proof assembly.
Fig. 12 is a schematic view of another explosion-proof assembly.

### DESCRIPTION OF THE EMBODIMENTS

### Embodiment 1

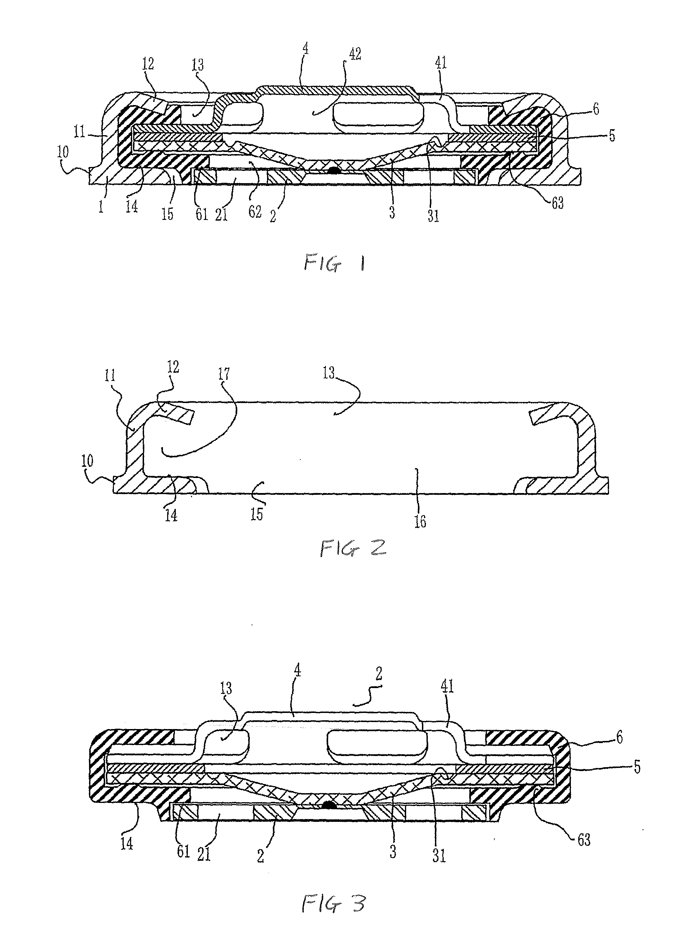

Figs. 1 to 4 illustrate a battery enveloping assembly and a battery according to a first embodiment of the present application. The battery enveloping assembly comprises an enveloping base and an explosion-proof assembly. The enveloping base comprises an enveloping plate 1 and a casing 11 extending upwardly from the enveloping plate 1. The external surface of the enveloping plate 1 is provided with a connection portion 10 protruding outwardly relative to the casing 11. A cavity 16, inside which the explosion-proof assembly is housed, is formed inside the casing 11. A portion of the enveloping plate within the casing 11 forms a supporting surface 14. The enveloping plate 1 is provided with a first through hole 15 through which an electrode passes in. The end portion of the casing 11 is bent toward the center of the casing 1 to form a bending portion 12 with a second through hole 13 through which an electrode extends out from the explosion-proof assembly. An annular sealing groove 17 is formed between the bending portion 12 and the supporting surface 14. As shown in Fig. 3, the explosion-proof assembly comprises an insulation 6 fitting with the inner wall of the casing 11, a cap 4 with an aperture 41, a Positive Temperature Coefficient (PTC) element 5, a first explosion-proof membrane and a force-bearing plate 2. The PTC element 5 serves for decreasing or cutting off the discharging electricity when the temperature of the battery reaches a predetermined temperature. The insulation 6 further extends in the direction of the first through hole 15 to form an insulation external supporting surface 61 with a third through hole 62. The periphery of the cap 4 housed in the insulation 6, the PCT element 5 and the periphery of the first explosion-proof membrane 3 are electrically connected. In order to configure the rupture of the explosion-proof membrane 3 to a further precise extent, the explosion-proof membrane 3 can be made of electrically-conductive material such as aluminum or copper, etc. A score 31 is provided on the explosion-proof membrane 3. The rupture of the explosion-proof membrane 3 can be precisely controlled by changing the depth of the score 31. A pressure-relief chamber 42 is formed centrally between the cap 4 and the first explosion-proof membrane 3. The central portion of the first explosion-proof membrane 3 is welded via the third though hole 62 to the force-bearing plate 2 bearing against the external supporting surface 61 of the insulation 6. The insulation 6 is provided with a protrusion 63 so that the first explosion-proof membrane 3 can be fixed more tightly. A vent 21 is provided in the force-bearing plate 2. The force-bearing plate 2 may have no vent 21 as required. For example, the interface between the force-bearing plate 2 and the insulation 6 may be configured as being accidented so as to keep the pressure balanced therethrough. The insulation 6 is tightly secured in the annular sealing groove 17 formed between the bending portion 12 and the supporting surface 14.

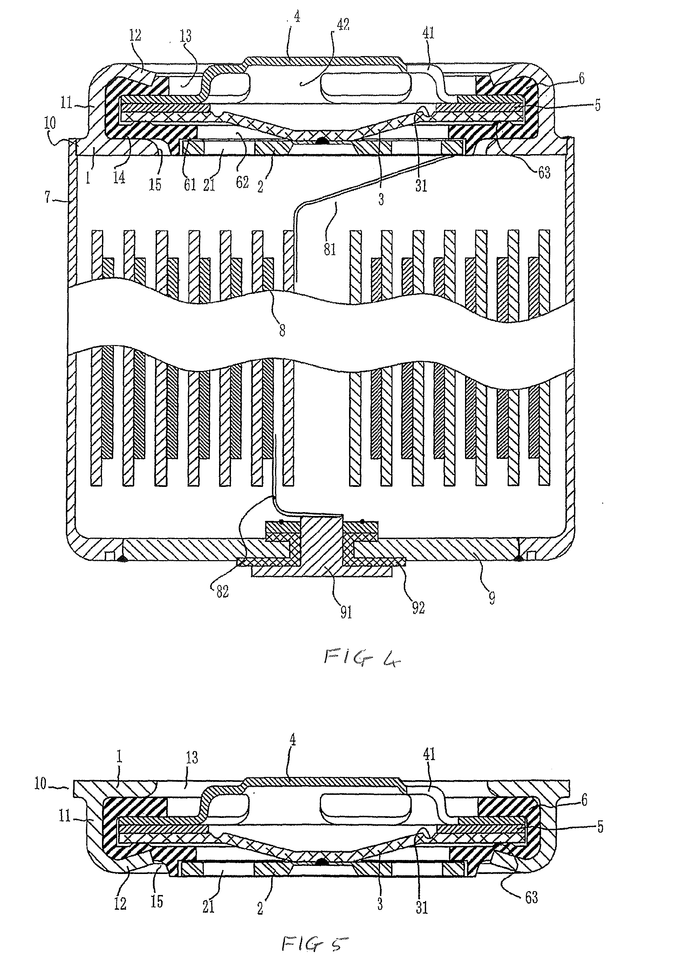

A battery using above-described battery enveloping assembly, as shown in Fig. 4, comprises a container 7 with a steel shell, a battery unit 8 housed within the container 7 with the steel shell, the battery enveloping assembly for sealing the container 7 and conducting electricity from the battery unit 8, a lower cover 9, a terminal 91 installed on the lower cover 9 through an insulation 91. The structure of the battery enveloping assembly is shown in Figs. 1-3. The container 7 with a steel shell is welded to the connection portion 10 protruding from the external surface of the enveloping plate 1. An electrode 81 of the battery unit 8 is electrically connected to the force-bearing plate 2, and another electrode 81 of the battery unit 8 is electrically connected to the terminal 91.

### Embodiment 2

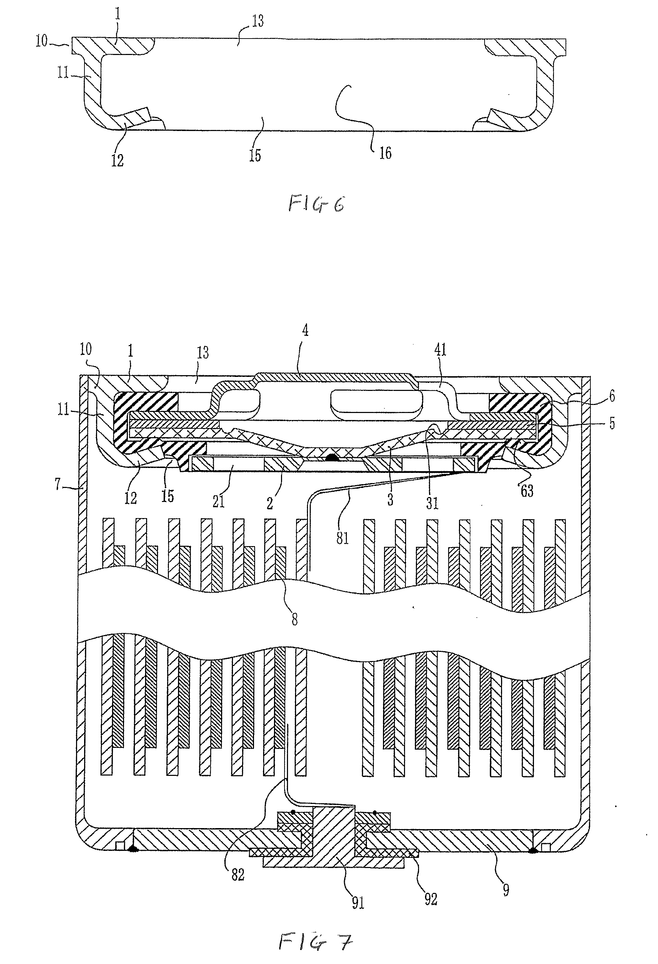

Figs. 5 to 7 illustrate a battery enveloping assembly and a battery according to a second embodiment of the present application. The battery enveloping assembly comprises an enveloping base and an explosion-proof assembly. As shown in Fig. 5 and Fig. 6, the enveloping base comprises an enveloping plate 1 and a casing 11 extending downwardly from the enveloping plate 1. The external surface of the enveloping plate 1 is provided with a connection portion 10 protruding outwardly relative to the casing 11. A cavity 16, inside which the explosion-proof assembly is housed, is formed inside the casing 11. The lower portion of the casing 11 forms a bending portion 12 through being bent inwardly so as to secure the explosion-proof assembly in the casing 11 in an insulating and sealing manner. A first through hole 15, through which an electrode is connected to the explosion-proof assembly, is provided at the center of the bending portion 12. A second through hole 13, through which an electrode extends out from the explosion-proof assembly, is provided in the enveloping plate 1 which is disposed on the top of the casing 11. An annular sealing groove 17 is formed between the enveloping plate 1 with the second through hole 13 and the bending portion 12. The structure of the explosion-proof assembly is identical to that of the Embodiment 1.

A battery using above-described battery enveloping assembly, as shown in Fig. 7, comprises a container 7 with an aluminum shell, a battery unit 8 housed inside the container 7 with the aluminum shell, the battery enveloping assembly for sealing the container 7 and conducting electricity from the battery unit 8, a lower cover 9, a terminal 91 installed on the lower cover 9 through an insulation 91. The structure of the battery enveloping assembly is shown in Fig. 5 and 6. The container 7 with the aluminum shell is welded to the connection portion 10 protruding from the external surface of the enveloping plate 1. An electrode 81 of the battery unit 8 is electrically connected to the force-bearing plate 2, and another electrode 81 of the battery unit 8 is electrically connected to the terminal 91.

The external structure of the battery enveloping assembly of the present embodiment presents substantially a "reverse" view of that of the Embodiment 1. The structure of the battery enveloping assembly of the present embodiment provides such advantages as (1) helping positioning between the enveloping plate 1 and the container 7 and facilitating welding due to the projection of the casing 11 into the container 7 while the casing 11 is hermetically connected to the battery container by welding, and (2) producing a battery with a smooth and novel appearance by exposing the enveloping plate 1 rather than the bending portion 12 to the outside.

### Embodiment 3

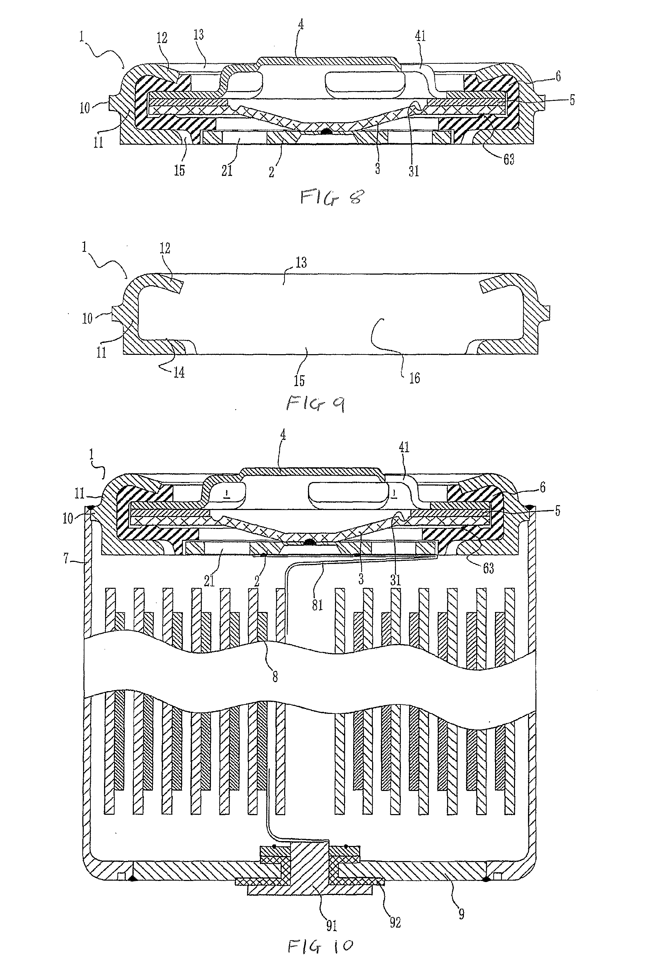

Figs. 8 and 9 illustrate a battery enveloping assembly and a battery according to a third embodiment of the present application. The battery enveloping assembly comprises an enveloping base 1 and an explosion-proof assembly. The enveloping base 1 comprises a casing 11 with a cavity 16. The casing 11 is bent inwardly in its upper portion to form a bending portion 12. The lower portion of the casing 11 extends inwardly perpendicular to the casing 11 to form a supporting surface 14. An annular sealing groove 17 is formed between the bending portion 12 and the supporting surface 14. The explosion-proof assembly is secured within the casing 11 in an insulating and sealing manner by the annular sealing groove 17. A first through hole 15, through which an electrode is connected to the explosion-proof assembly, is provided at the center of the bottom of the casing 11. A second through hole 13, through which an electrode extends out from the explosion-proof assembly, is provided in the top of the casing 1. An annular connection portion 10 is provided in the middle of the external surface of the casing 11. The structure of the explosion-proof assembly is identical to that of the Embodiment 1.

A battery using the above-described battery enveloping assembly, as shown in Fig. 10, comprises a container 7 with an aluminum shell, a battery unit 8 housed inside the container 7 with the aluminum shell, the battery enveloping assembly for sealing the container 7 and conducting electricity from the battery unit 8, a lower cover 9, a terminal 91 installed on the lower cover 9 through an insulation 91. The structure of the battery enveloping assembly is shown in Figs. 8 and 9. The container 7 with the aluminum shell is welded to the annular connection portion 10 protruding from the middle of the external surface of the enveloping plate 1. An electrode 81 of the battery unit 8 is electrically connected to the force-bearing plate 2, and another electrode 81 of the battery unit 8 is electrically connected to the terminal 91.

The provision of the protruding annular connection portion 10 in the middle of the external surface of the casing 11 provides such advantages as helping positioning between the enveloping plate 1 and the container 7 due to the projection of a part of the casing 11 into the container 7 while the casing 11 is hermetically connected to the battery container by welding, and facilitating welding between the enveloping plate 1 and the container 7 due to the exposure of a part of the casing 11 out of the container 7.

### Embodiment 4

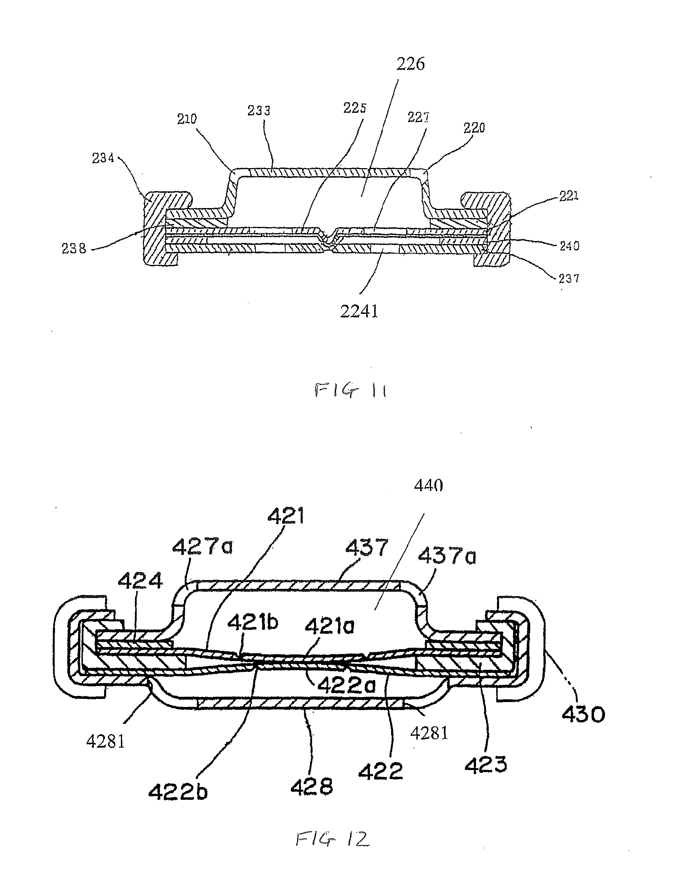

Fig. 11 illustrates an explosion-proof assembly according to a fourth embodiment of the present application. The explosion-proof assembly comprises a first insulation 234, a cap 233 with an aperture 210, a PTC element 238, a first explosion-proof membrane 225, an annular insulation 240 and a force-bearing plate 224. The first insulation 234 has a hollow internal cavity and an annular sealing groove on the side wall of the internal cavity of the first insulation 234. The cap 233 with the aperture 210, the first explosion-proof membrane 225, the annular insulation 240 and the force-bearing plate 224 are stacked successively at their respective peripheries and then pressed tightly in the annular sealing groove of the first insulation. The periphery of the cap 233 is electrically connected to that of the first explosion-proof membrane 225. A pressure-relief chamber 226 is formed centrally between the cap 233 and the explosion-proof membrane 225. A vent 2241 is bored in the force-bearing plate 224. The force-bearing plate 224 bears against the insulation 240 and is welded to the center of the first explosion-proof membrane 225. A score 227 is provided on the explosion-proof membrane 225.
The rupture of the first explosion-proof membrane 225 can be precisely controlled by changing the depth of the score 227.

The present embodiment provides an explosion-proof assembly with a simple structure which is easy to manufacture and can be conveniently assembled in the enveloping bases as described in the above-depicted embodiments.

### Embodiment 5

Fig. 12 illustrates an explosion-proof assembly according to a fifth embodiment of the present application. The explosion-proof assembly comprises a first insulation 423, a cap 437 with an aperture 4271, a PTC element 424, a first explosion-proof membrane 421 with a score 421 b, a second explosion-proof membrane 422 with a score 422b, a fastener 428 and a second insulation 430. Each of the first insulation 423, the second insulation 430 and the fastener 428 has a hollow internal cavity and an annular sealing groove on the side wall of the respective internal cavities. The cap 437, the PTC element 424 and the first explosion-proof membrane 421 are stacked successively and connected electrically at their respective peripheries and then pressed tightly in the annular sealing groove included in the first insulation 423 with a tubular structure. A pressure-relief chamber 440 is formed centrally between the cap 437 and the first explosion-proof membrane 421. The first insulation 423 and the periphery of the second explosion-proof membrane 422 below the first insulation 423 are tightly held in the fastener 428 with a vent 4281. The first explosion-proof membrane 421 and the second explosion-proof membrane 422 are fixed together through a connection portion 421a of the first explosion-proof membrane 421 and a connection portion 422a of the second explosion-proof membrane 422. The first tubular insulation 423 is secured in the fastener 428 through a mechanical flanging procedure. The circumference of the fastener 428 is surrounded by the second tubular insulation in an insulating manner.

The present embodiment further increases the reliability and safety of the explosion-proof assembly through a double protection provided by the first and second explosion-proof membranes.

## Claims

1. A battery enveloping assembly, comprising an explosion-proof assembly, **characterized in that** the battery enveloping assembly further comprises an enveloping base,
wherein a cavity configured to house the explosion-proof assembly is provided at a center of the enveloping base, a supporting surface configured to support the explosion-proof assembly is provided on the enveloping base at a bottom of the cavity, a first through hole through which an electrode is connected to the explosion-proof assembly is provided in the supporting surface, the explosion-proof assembly is secured inside the cavity in an insulating and sealing manner, and a second through hole through which an electrode extends out from the explosion-proof assembly is provided in the enveloping base on a top of the cavity.

2. The battery enveloping assembly according to claim 1, **characterized in that** the enveloping base comprises an enveloping plate and a casing extending upwardly from the enveloping plate,
wherein the cavity is formed inside the casing, a portion of the enveloping plate within the casing forms the supporting face, and the explosion-proof assembly is secured in the casing in an insulating and sealing manner.

3. The battery enveloping assembly according to claim 2, **characterized in that** an external surface of the enveloping plate is provided with a connection portion protruding outwardly relative to the casing.

4. The battery enveloping assembly according to claim 2, **characterized in that** the casing has an inwardly-bending top portion at a center of which the second through hole is provided, and the explosion-proof assembly is secured inside the casing by the inwardly-bending portion in an insulating and sealing manner.

5. The battery enveloping assembly according to claim 3, **characterized in that** the explosion-proof assembly comprises an insulation fitting with an inner wall of the cavity, a cap with an aperture, a first explosion-proof membrane and a force-bearing plate,
wherein the insulation further extends in a direction of the first through hole to form an insulation external supporting surface with a third through hole, the cap and the first explosion-proof membrane are electrically connected at their respective peripheries and secured tightly in an annular sealing groove formed between the bending portion and the supporting surface through the insulation, a pressure-relief chamber is formed centrally between the cap and the first explosion-proof membrane, and a central portion of the first explosion-proof membrane is electrically connected via the third through hole to the force-bearing plate bearing against the insulation external supporting surface.

6. The battery enveloping assembly according to claim 5, **characterized in that** a protrusion extends vertically from the insulation external supporting surface in adjacent to a side wall of the second through hole of the enveloping plate, and the force-bearing plate and the enveloping plate are separated by the protrusion.

7. The battery enveloping assembly according to claim 1, **characterized in that** the explosion-proof assembly comprises a first insulation fitting with an inner wall of the cavity, a cap with an aperture, a first explosion-proof membrane, an annular insulation and a force-bearing plate,
wherein the first insulation has a hollow cavity and an annular sealing groove on a side wall of the first insulation, the cap with the aperture, the first explosion-proof membrane, the annular insulation and the force-bearing plate are stacked successively at their respective peripheries and then pressed tightly in the annular sealing groove, the periphery of the cap is electrically connected to that of the first explosion-proof membrane, a pressure-relief chamber is formed centrally between the cap and the explosion-proof membrane, and a central portion of the first explosion-proof membrane passes through the annular insulation and is electrically connected to the force-bearing plate.

8. The battery enveloping assembly according to claim 1, **characterized in that** the explosion-proof assembly comprises a first insulation fitting with an inner wall of the cavity, a cap with an aperture, a first explosion-proof membrane, a second explosion-proof membrane, a fastener and a second insulation,
wherein each of the first insulation, second insulation and fastener has a hollow cavity and an annular sealing groove on a side wall of the respective cavity, the cap and the first explosion-proof membrane are electrically connected and stacked successively at their respective peripheries and then pressed tightly in the annular sealing groove of the first insulation, a pressure-relief chamber is formed centrally between the cap and the explosion-proof membrane, the first insulation and a periphery of the second explosion-proof membrane below the first insulation are held and tightly secured in the annular sealing groove of the fastener, central portions of the first and second explosion-proof membranes are electrically connected, and a circumference of the annular sealing groove of the fastener is held and secured tightly in the annular sealing groove of the second insulation.

9. The battery enveloping assembly according to any one of claims 5-8, **characterized in that** a Positive Temperature Coefficient element is connected in series between a periphery of the cap and a periphery of the first explosion-proof membrane by means of pressing.

10. The battery enveloping assembly according to any one of claims 5-8, **characterized in that** a vent is provided in the force-bearing plate.

11. The battery enveloping assembly according to any one of claims 5-8, **characterized in that** a score is provided on each of the explosion-proof membranes.

12. A battery, comprising a container, a battery unit housed in the container and a battery enveloping assembly for sealing the container, wherein the battery enveloping assembly comprises an explosion-proof assembly, **characterized in that** the battery enveloping assembly further comprises an enveloping base,
wherein a cavity configured to house the explosion-proof assembly is provided at a center of the enveloping base, a supporting surface configured to support the explosion-proof assembly is provided on the enveloping base at a bottom of the cavity, a first through hole through which an electrode is connected to the explosion-proof assembly is provided in the supporting surface, the explosion-proof assembly is secured inside the cavity in an insulating and sealing manner, and a second through hole through which an electrode extends out from the explosion-proof assembly is provided in the enveloping base on a top of the cavity.

13. The battery according to claim 12, **characterized in that** the enveloping base comprises an enveloping plate and a casing extending upwardly from the enveloping plate,
wherein the cavity is formed inside the casing, a portion of the enveloping plate within the casing forms the supporting face, the explosion-proof assembly is secured inside the casing in an insulating and sealing manner, and an external surface of the enveloping plate is provided with a connection portion protruding outwardly relative to the casing and is fixed to the container in a sealing manner through the connection portion protruding outwardly.

14. The battery according to claim 13, **characterized in that** the casing has an inwardly-bending top portion at a center of which the second through hole is provided, and the explosion-proof assembly is secured inside the casing by the inwardly-bending portion in an insulating and sealing manner.

15. The battery according to claim 14, **characterized in that** the explosion-proof assembly comprises an insulation fitting with an inner wall of the cavity, a cap with an aperture, a first explosion-proof membrane and a force-bearing plate,
wherein the insulation further extends in a direction of the first through hole to form an insulation external supporting surface with a third through hole, the cap and the first explosion-proof membrane are electrically connected at their respective peripheries and secured tightly in an annular sealing groove formed between the bending portion and the supporting surface through the insulation, a pressure-relief chamber is formed centrally between the cap and the first explosion-proof membrane, and a central portion of the first explosion-proof membrane is electrically connected via the third through hole to the force-bearing plate bearing against the insulation external supporting surface.

16. The battery according to claim 15, **characterized in that** a protrusion extends vertically from the insulation external supporting surface along a side wall of the second through hole of the enveloping plate, and the force-bearing plate and the enveloping plate are separated by the protrusion.

17. The battery according to claim 12, **characterized in that** the explosion-proof assembly comprises a first insulation fitting with an inner wall of the cavity, a cap with an aperture, a first explosion-proof membrane, an annular insulation and a force-bearing plate,
wherein the first insulation has a hollow cavity and an annular sealing groove on a side wall of the first insulation, the insulation further extending in a direction of the first through hole to form an insulation external supporting surface with a third through hole, the cap with the aperture, the first explosion-proof membrane, the annular insulation and the force-bearing plate are stacked successively at their respective peripheries and then pressed tightly in the annular sealing groove, the periphery of the cap is electrically connected to that of the first explosion-proof membrane, a pressure-relief chamber is formed centrally between the cap and the explosion-proof membrane, and a central portion of the first explosion-proof membrane passes through the annular insulation and is electrically connected to the force-bearing plate.

18. The battery according to claim 12, **characterized in that** the explosion-proof assembly comprises a first insulation fitting with an inner wall of the cavity, a cap with an aperture, a first explosion-proof membrane, a second explosion-proof membrane, a fastener and a second insulation,
wherein each of the first insulation, second insulation and fastener has a hollow cavity and an annular sealing groove on a side wall of the respective cavity, the cap and the first explosion-proof membrane are electrically connected and stacked successively at their respective peripheries and then pressed tightly in the annular sealing groove of the first insulation, a pressure-relief chamber is formed centrally between the cap and the explosion-proof membrane, the first insulation and a periphery of the second explosion-proof membrane below the first insulation are held and tightly secured in the annular sealing groove of the fastener, central portions of the first and second explosion-proof membranes are electrically connected, and a circumference of the annular sealing groove of the fastener is held and secured tightly in the annular sealing groove of the second insulation.

19. The battery according to any one of claims 15-18, **characterized in that** a Positive Temperature Coefficient element is connected in series between a periphery of the cap and a periphery of the first explosion-proof membrane by means of pressing.

20. The battery according to any one of claims 15-18, **characterized in that** a vent is provided in the force-bearing plate, and a score is provided on each of the explosion-proof membranes.
